# EUROPEAN PATENT SPECIFICATION

(11) **EP 3 202 850 B1**
(45) Date of publication and mention of the grant of the patent: **20.05.2020**
(21) Application number: 16847595.2
(22) Date of filing: 26.09.2016
(51) Int. Cl.: C08L 69/00, C08L 51/04, C08L 25/12, C08K 3/00, C08K 5/00, C08J 5/00

(54) **POLYCARBONATE-ABS-BASED ALLOY RESIN COMPOSITION HAVING EXCELLENT PLATING ADHESIVE STRENGTH, AND MOLDED PRODUCT COMPRISING SAME**
AUF POLYCARBONAT-ABS BASIERENDE LEGIERUNGSHARZZUSAMMENSETZUNG MIT SEHR GUTER PLATTIERUNGSHAFTFESTIGKEIT UND GEFORMTES PRODUKT DAMIT
COMPOSITION DE RÉSINE DE TYPE ALLIAGE POLYCARBONATE-ABS AYANT UNE EXCELLENTE FORCE D'ADHÉRENCE À UN PLACAGE, ET PRODUIT MOULÉ LA CONTENANT

(30) Priority: 05.11.2015 KR 20150154968
(43) Date of publication of application: 09.08.2017
(73) Proprietor: LG Chem, Ltd., Seoul 07336 (KR)
(72) Inventor: KIM, Jae Hwan, Daejeon 34122 (KR); KIM, Myeung Il, Daejeon 34122 (KR); YOO, Seok Jae, Daejeon 34122 (KR); LEE, Sung Ho, Daejeon 34122 (KR); AHN, Sung Tae, Daejeon 34122 (KR); JEONG, Min Ho, Daejeon 34122 (KR)
(74) Representative: Goddar, Heinz J.
(86) International application number: PCT/KR2016/010744
(87) International publication number: WO 2017/078273

(56) References cited:
- WO-A1-2015/162239
- JP-A- 2002 294 059
- JP-A- 2011 236 263
- KR-A- 20150 026 532
- US-A- 5 087 663
- US-A1- 2011 159 293
- US-A1- 2013 203 909
- US-A1- 2014 076 616

## Description

### [Technical Field]

The present disclosure relates to a polycarbonate-ABS based alloy resin composition having superior plating adhesion and more particularly to a polycarbonate-ABS based alloy resin composition having superior mechanical properties, particularly superior low-temperature impact strength, as well as improved plating adhesion.

### [Background Art]

Plastic plating is widely used because it provides a metal-like appearance and improves rigidity, heat resistance, abrasion resistance and the like. In particular, acrylonitrile-butadiene-styrene (hereinafter referred to as ABS) resin is widely used as a plastic for plating because it can be treated with chromic acid and sulfuric acid and provides satisfactory plating properties.

ABS resin is widely used in various products, such as automotive products, electrical and electronic products, and office equipment, due to the stiffness and chemical resistance of acrylonitrile, the processability of butadiene and styrene, and the mechanical strength and aesthetics of the ABS resin.

Butadiene rubber of an ABS resin is oxidized by an etchant, such as chromic acid or sulfuric acid, thereby providing anchor holes. Accordingly, stable adsorption of a metal thereto can be guaranteed, and mechanical anchoring effect provided by a metallic film embedded in the anchor holes allows high adhesion compared to general plastic resins. Such high plating adhesion of an ABS resin has led to the active development of plastic plating.

However, when an ABS resin is plated, the plated ABS resin suffers decreased impact strength and heat resistance, compared to before plating with the ABS resin. To address such a problem, a PC/ABS resin prepared by blending an ABS resin with a polycarbonate resin is used as a plastic for plating. However, in this case, problems, such as non-plating or peeling off of a metal from a plated plastic, occur due to content decrease of the ABS resin.

Therefore, there is a need for development of a plastic for plating which provides superior impact resistance and heat resistance as well as superior plating adhesion.

### [Related Art Document]

[Patent Document] KR 0989907 B1

US 2011/159293 A1 discloses a composition comprising 75 wt% of a polycarbonate, 15 or 20 wt% of an ABS copolymer prepared from a polybutadiene having a particle size of 1 micron and 5 or 10 wt% of an ABS copolymer prepared from a polybutadiene having a particle size of 0.27 microns.

US 2013/203909 A1 discloses a thermoplastic composition comprising 40 wt% to 75 wt% of one or more polycarbonate resins, 24 wt% to 53 wt% of a first impact modifier and 1 wt% to 7 wt% of a second impact modifier, wherein the combined weight percent value of all components does not exceed 100 wt%, wherein all weight percent values are based on the total weight of the composition, wherein the composition exhibits an adhesion value at least about 10% greater than that of a reference composition consisting essentially of substantially the same proportions of the same polycarbonate polymer and the same first impact modifier.

### [Disclosure]

### [Technical Problem]

Therefore, the present invention has been made in view of the above problems, and it is one object of the present invention to provide a polycarbonate-ABS based alloy resin composition having superior plating adhesion as well as superior mechanical properties.

The above and other objects can be accomplished by the present invention described below.

### [Technical Solution]

In accordance with an aspect of the present invention, the above and other objects can be accomplished by the provision of a polycarbonate-ABS based alloy resin composition with superior plating adhesion including (a) 40 to 70 % by weight of a polycarbonate resin; (b) 5 to 35 % by weight of a copolymer prepared by polymerizing a conjugated diene rubber having an average particle diameter of 0.6 to 1.5 µm, an aromatic vinyl compound, and a vinyl cyanide compound; (c) 5 to 20 % by weight of a copolymer prepared by polymerizing a conjugated diene rubber having an average particle diameter of 0.2 µm or more and less than 0.6 µm, an aromatic vinyl compound, and a vinyl cyanide compound; (d) 5 to 20 % by weight of a copolymer prepared by polymerizing a conjugated diene rubber having an average particle diameter of 0.1 to 0.3 µm, an aromatic vinyl compound, and a (meth)acrylate compound; and (e) 5 to 40 % by weight of an aromatic vinyl compound-vinyl cyanide compound copolymer, wherein the average particle diameter is measured by means of a particle size analyzer, as described in the examples below.

According to the invention is also a method of manufacturing a polycarbonate-ABS based alloy resin composition, the method comprising a step of melt-mixing (a) 40 to 70 % by weight of a polycarbonate resin; (b) 5 to 35 % by weight of a copolymer prepared by polymerizing a conjugated diene rubber having an average particle diameter of 0.6 to 1.5 µm, an aromatic vinyl compound, and a vinyl cyanide compound; (c) 5 to 20 % by weight of a copolymer prepared by polymerizing a conjugated diene rubber having an average particle diameter of 0.2 µm or more and less than 0.6 µm, an aromatic vinyl compound, and a vinyl cyanide compound; (d) 5 to 20 % by weight of a copolymer prepared by polymerizing a conjugated diene rubber having an average particle diameter of 0.1 to 0.3 µm, an aromatic vinyl compound, and a (meth)acrylate compound; and (e) 5 to 40 % by weight of an aromatic vinyl compound-vinyl cyanide compound copolymer, followed by extrusion, wherein the average particle diameter is measured by means of a particle size analyzer, as described below.

### [Advantageous effects]

As apparent from the above description, the present disclosure provides a polycarbonate-ABS based alloy resin composition providing increased plating adhesion and superior mechanical properties, particularly superior low-temperature impact strength, due to increase in surface roughness of an alloy of a polycarbonate resin and ABS-based resin.

### [Best Mode]

Hereinafter, the present disclosure is described in detail.

A polycarbonate-ABS based alloy resin composition having superior plating adhesion according to the present disclosure includes (a) 40 to 70 % by weight of a polycarbonate resin; (b) 5 to 35 % by weight of a copolymer prepared by polymerizing a conjugated diene rubber having an average particle diameter of 0.6 to 1.5 µm, an aromatic vinyl compound, and a vinyl cyanide compound; (c) 5 to 20 % by weight of a copolymer prepared by polymerizing a conjugated diene rubber having an average particle diameter of 0.2 µm or more and less than 0.6 µm, an aromatic vinyl compound, and a vinyl cyanide compound; (d) 5 to 20 % by weight of a copolymer prepared by polymerizing a conjugated diene rubber having an average particle diameter of 0.1 to 0.3 µm, an aromatic vinyl compound, and a (meth)acrylate compound; and (e) 5 to 40 % by weight of an aromatic vinyl compound-vinyl cyanide compound copolymer. Within this range, superior plating adhesion, as well as superior mechanical properties, is provided.

Hereinafter, each ingredient of the polycarbonate-ABS based alloy resin composition having superior plating adhesion of the present disclosure is described in detail.

### (a) Polycarbonate resin

The polycarbonate resin (a) is not specifically limited and, for example, may be a resin prepared by polymerizing a bisphenol-based monomer and a carbonate precursor.

The bisphenol-based monomer may be one or more selected from the group consisting of, for example, bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, 2,2-bis(4-hydroxyphenyl)propane(bisphenol A (BPA)), 2,2-bis(4-hydroxyphenyl)butane, 1,1-bis(4-hydroxyphenyl)cyclohexane(bisphenol Z (BPZ)), 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, bis(4-hydroxyphenyl)diphenylmethane, and α,ω-bis[3-(o-hydroxyphenyl)propyl]polydimethylsiloxane.

The carbonate precursor may be one or more selected from the group consisting of, for example, dimethyl carbonate, diethyl carbonate, dibutyl carbonate, dicyclohexyl carbonate, diphenyl carbonate, ditolyl carbonate, bis(chlorophenyl) carbonate, m-cresyl carbonate, dinaphthyl carbonate, bis(diphenyl) carbonate, carbonyl chloride(phosgene), triphosgene, diphosgene, carbonyl bromide, and bishaloformate.

The amount of the polycarbonate resin (a) is 40 to 70 % by weight, or preferably 45 to 65 % by weight. Within this range, superior heat resistance and impact strength are provided.

The weight-average molecular weight of the polycarbonate resin (a) may be, for example, 20,000 to 80,000 g/mol, 40,000 to 75,000 g/mol, or 50,000 to 70,000 g/mol. Within this range, superior impact strength, satisfactory fluidity, and superior processabililty may be obtained.

The polycarbonate resin (a) may have, for example, a melt index (300°C, 1.2 kg) of 3 to 70 g/10 min, 15 to 50 g/10 min, or 25 to 60 g/10 min which is measured according to ASTM D1238. Within this range, superior processabililty and excellent property balance are provided.

### (b) Copolymer prepared by polymerizing conjugated diene rubber having average particle diameter of 0.6 to 1.5 µm, aromatic vinyl compound, and vinyl cyanide compound

The amount of the copolymer (b) may be, for example, 7 to 25 % by weight, or 10 to 20 % by weight. Within this range, superior mechanical properties, such as superior tensile strength and impact strength, and excellent heat deflection temperature and plating adhesion are provided.

The average particle diameter of the conjugated diene rubber may be, for example, 0.8 to 1.4 µm, or 1.0 to 1.3 µm. Within this range, superior plating adhesion and impact strength are provided.

The copolymer (b) may be prepared by, for example, polymerizing 5 to 20 % by weight of a conjugated diene rubber, 60 to 80 % by weight of an aromatic vinyl compound, and 10 to 30 % by weight of a vinyl cyanide compound. Alternatively, the copolymer (b) may be prepared by, for example, polymerizing 10 to 15 % by weight of a conjugated diene rubber, 65 to 75 % by weight of an aromatic vinyl compound, and 15 to 25 % by weight of a vinyl cyanide compound. In this case, superior mechanical properties and property balance are provided.

### (c) Copolymer prepared by polymerizing conjugated diene rubber having average particle diameter of 0.2 µm or more and less than 0.6 µm, aromatic vinyl compound, and vinyl cyanide compound

The amount of the copolymer (c) may be, for example, 7 to 17 % by weight, or 10 to 15 % by weight. Within this range, superior plating adhesion and processabililty are provided.

The conjugated diene rubber may have an average particle diameter of, for example, 0.2 µm to 0.5 µm, or 0.3 to 0.5 µm. Within this range, superior plating adhesion is provided.

The copolymer (c) may be prepared by polymerizing, for example, 50 to 70 % by weight of a conjugated diene rubber, 20 to 40 % by weight of an aromatic vinyl compound, and 5 to 20 % by weight of a vinyl cyanide compound. Alternatively, the copolymer (c) may be prepared by polymerizing, for example, 50 to 65 % by weight of a conjugated diene rubber, 25 to 35 % by weight of an aromatic vinyl compound, and 10 to 15 % by weight of a vinyl cyanide compound. In this case, superior mechanical properties and property balance are provided.

In the polycarbonate-ABS based alloy resin composition according to the present disclosure including the copolymers (b) and (c) prepared by respectively polymerizing conjugated diene rubbers, average particle diameters of which are different, particles having different average particle diameters are present. Accordingly, surface roughness increases and thus plating adhesion is further increased.

### (d) Copolymer prepared by polymerizing conjugated diene rubber having average particle diameter of 0.1 to 0.3 µm, aromatic vinyl compound, and (meth)acrylate compound

The amount of the copolymer (d) may be, for example, 5 to 17 % by weight, or 5 to 13 % by weight. Within this range, superior plating adhesion is provided.

The average particle diameter of the conjugated diene rubber may be, for example, 0.15 to 0.25 µm, or 0.20 to 0.25 µm. Within this range, superior plating adhesion is provided.

The (meth)acrylate compound of the copolymer (d) may be, for example, alkylmethacrylate. In a specific embodiment, the alkylmethacrylate may be one or more selected from the group consisting of methyl methacrylate, butyl methacrylate, and benzyl methacrylate.

The copolymer (d) may be, for example, a core-shell graft copolymer including 60 to 80 % by weight or 65 to 75 % by weight of a core and 20 to 40 % by weight or 25 to 35 % by weight of a shell. Within this range, increased impact strength and processabililty are provided.

A total content of the copolymers (b), (c), and (d) may be, for example, 20 to 50 % by weight, 25 to 45 % by weight, or 30 to 40 % by weight. Within this range, superior plating adhesion and low-temperature impact strength are provided.

### (e) Aromatic vinyl compound-vinyl cyanide compound copolymer

The amount of the copolymer (e) is 5 to 40 % by weight, preferably 10 to 30 % by weight, or 5 to 25 % by weight. Within this range, superior tensile strength is provided.

The copolymer (e) may be prepared by polymerizing, for example, 60 to 85 % by weight or 70 to 80 % by weight of an aromatic vinyl compound and 15 to 40 % by weight or 20 to 30 % by weight of a vinyl cyanide compound. Within this range, superior mechanical properties and property balance are provided.

The conjugated diene rubber of the present disclosure may be a rubber prepared by polymerizing one or more selected from the group consisting of, for example, 1,3-butadiene, 2,3-dimethyl-1,3-butadiene, 2-ethyl-1,3-butadiene, 1,3-pentadiene, and isoprene.

The aromatic vinyl compound of the present disclosure may be one or more selected from the group consisting of, for example, styrene, α-methylstyrene, o-ethylstyrene, p-ethylstyrene, and vinyltoluene.

The vinyl cyanide compound of the present disclosure may be one or more selected from the group consisting of, for example, acrylonitrile, methacrylonitrile, and ethacrylonitrile.

The polycarbonate-ABS based alloy resin composition further includes one or more selected from the group consisting of, for example, an antimicrobial agent, a thermal stabilizer, an antioxidant, a releasing agent, a photostabilizer, a surfactant, a coupling agent, a plasticizer, an admixture, a colorant, a stabilizer, a lubricant, an antistatic agent, a toning agent, a flame retardant, a weather resistant agent, an ultraviolet absorber, and a sunscreen agent.

The polycarbonate resin composition may have an impact strength of, for example, 30 kgf·cm/cm or more, or 30 to 45 kgf·cm/cm which is measured at -30°C according to ASTM D256.

The polycarbonate resin composition may have a plating adhesion of, for example, 7.0 N/cm or more, 8.0 N/cm or more, or 8.0 to 12 N/cm.

A method of manufacturing the polycarbonate-ABS based alloy resin composition having superior plating adhesion according to the present disclosure includes a step of melt-mixing (a) 40 to 70 % by weight of a polycarbonate resin; (b) 5 to 35 % by weight of a copolymer prepared by polymerizing a conjugated diene rubber having an average particle diameter of 0.6 to 1.5 µm, an aromatic vinyl compound, and a vinyl cyanide compound; (c) 5 to 20 % by weight of a copolymer prepared by polymerizing a conjugated diene rubber having an average particle diameter of 0.2 µm or more and less than 0.6 µm, an aromatic vinyl compound, and a vinyl cyanide compound; (d) 5 to 20 % by weight of a copolymer prepared by polymerizing a conjugated diene rubber having an average particle diameter of 0.1 to 0.3 µm, an aromatic vinyl compound, and a (meth)acrylate compound; and (e) 5 to 40 % by weight of an aromatic vinyl compound-vinyl cyanide compound copolymer, followed by extrusion.

The melt-mixing may be carried out, for example, at 220 to 290°C, or 230 to 260°C.

In addition, provided is a molded article manufactured using the polycarbonate-ABS based alloy resin composition of the present disclosure.

Now, the present invention will be described in more detail with reference to the following preferred examples. However, these examples are provided for illustrative purposes only.

### [Examples]

Compounds used in examples and comparative examples below are as follows:
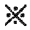 PC: Polycarbonate having a weight-average molecular weight of 44,000 g/mol and a melt index of 15 g/10 min.
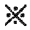 Large particle diameter ABS: Copolymer prepared by polymerizing 10 % by weight of a butadiene rubber having an average particle diameter of 1.0 µm, 70 % by weight of styrene, and 20 % by weight of acrylonitrile.
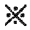 Small particle diameter ABS: Copolymer prepared by polymerizing 60 % by weight of a butadiene rubber having an average particle diameter of 0.3 µm, 30 % by weight of styrene, and 10 % by weight of acrylonitrile.
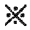 MBS-1: Copolymer prepared by polymerizing 70 % by weight of a butadiene rubber having an average particle diameter of 0.2 µm, as an ingredient of a core, and 20 % by weight of acrylate and 10 % by weight of styrene, as ingredients of a shell.
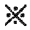 MBS-2: Copolymer prepared by polymerizing 70 % by weight of butadiene rubber having an average particle diameter of 0.1 µm, as an ingredient of a core, and 20 % by weight of acrylate and 10 % by weight of styrene, as ingredients of a shell.
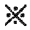 MBS-3: Copolymer prepared by polymerizing 70 % by weight of a butadiene rubber having an average particle diameter of 0.4 µm, as an ingredient of a core, and 20 % by weight of acrylate and 10 % by weight of styrene, as ingredients of a shell.
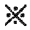 SAN: Copolymer prepared by polymerizing 75 % by weight of styrene and 25 % by weight of an acrylonitrile copolymer.

### Examples 1 to 5 and Comparative Examples 1 to 8 and 10 (Example 3 not according to the invention)

Respective ingredients summarized in Tables 1 and 2 below were added in amounts disclosed in the tables, followed by mixing by means of a mixer. Subsequently, each of the resultant mixtures was extruded at 230 to 260°C by means of a twin-screw extruder and then pelletized. The formed pellets were dried at 80°C for 4 hours or more and then injection molded. As a result, a specimen was obtained. The obtained specimen was allowed to stand at room temperature for 48 hours and then subjected to property measurement.

### [Test Example]

The properties of the polycarbonate-ABS based alloy resin composition prepared according to each of Examples 1 to 5 and Comparative Examples 1 to 10 were measured according to the following methods. Results are summarized in Tables 1 and 2 below.
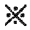 Tensile strength ((98 kPa/cm²) kgf/cm²) : Measured according to ASTM D638.
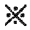 Impact strength (1/4", 9.8 N•cm/cm (kgf·cm/cm)): Measured at 23°C and -30°C according to ASTM D256
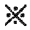 Heat deflection temperature (°C): Measured according to ASTM D648.
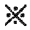 Plating adhesion (N/cm): A 10 X 10 square specimen was injected after melt extruding. The injected specimen was plated and then was subjected to a 90° peel adhesion test by intentionally peeling off some of the plating.
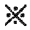 Average particle diameter: Measured by means of a particle size analyzer, NICOMP 380.
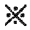 Weight-average molecular weight (g/mol): A sample was dissolved in tetrahydrofuran (THF) and then the weight-average molecular weight thereof was measured using GPC.

**[Table 1]**

| Classification | Example 1 | Example 2 | Example 3 | Example 4 | Exampie 5 | Comparative Example 1 | Comparative Example 2 |
|---|---|---|---|---|---|---|---|
| PC | 45 | 65 | 50 | 45 | 45 | 45 | 45 |
| Large particle diameter ABS | 10 | 10 | 20 | 15 | 12 | 30 | 30 |
| Small particle diameter ABS | 10 | 10 | 10 | 7 | 14 | 15 | - |
| MBS-1 | 10 | 10 | 10 | 12 | 6 | - | 15 |
| SAN | 25 | 5 | 0 | 21 | 23 | 10 | 10 |
| Tensile strength | 420 | 410 | 400 | 415 | 417 | 420 | 425 |
| Impact strength (23°C) | 48 | 57 | 53 | 50 | 49 | 49 | 48 |
| Impact strength (-30°C) | 30 | 35 | 32 | 31 | 31 | 32 | 30 |
| Heat deflection temperature | 99 | 108 | 103 | 100 | 100 | 98 | 99 |
| Plating adhesion | 8.0 | 9.0 | 8.8 | 8.2 | 8.1 | 4.5 | 4.0 |

**[Table 2]**

| Classification | Comparative Example 3 | Comparative Example 4 | Comparative Example 5 | Comparative Example 6 | Comparative Example 7 | Comparative Example 8 | | Comparative Example 10 |
|---|---|---|---|---|---|---|---|---|
| PC | 30 | 80 | 45 | 45 | 45 | 45 | | 45 |
| Large particle diameter ABS | 15 | 5 | - | - | - | 50 | | 10 |
| Small particle diameter ABS | 15 | 5 | 11 | 25 | - | - | | 10 |
| MBS-1 | 15 | 5 | 10 | - | 20 | - | | - |
| MBS-2 | - | - | - | - | - | - | | - |
| MBS-3 | - | - | - | - | - | - | | 10 |
| SAN | 25 | 5 | 34 | 30 | 35 | 5 | | 25 |
| Tensile strength | 380 | 460 | 420 | 420 | 430 | 460 | | 425 |
| Impact strength (23°C) | 30 | 60 | 48 | 47 | 45 | 42 | | 50 |
| Impact strength (-30°C) | 14 | 22 | 26 | 25 | 28 | 17 | | 31 |
| Heat deflection temperature | 85 | 117 | 98 | 98 | 99 | 99 | | 98 |
| Plating adhesion | 3.8 | 2.0 | 4.0 | 2.3 | 2.0 | 1.5 | | 6.0 |

As summarized in Tables 1 and 2, the polycarbonate-ABS based alloy resin compositions (Examples 1 to 5) according to the present disclosure (Example 3 not according to the invention) exhibit superior tensile strength and impact strength, particularly superior low-temperature impact strength and low-temperature heat deflection temperature, as well as superior plating adhesion.

On the other hand, in the case of the resin composition of Comparative Example 5 which does not include an ABS copolymer polymerized with butadiene having a large particle diameter, low-temperature impact strength and plating adhesion are decreased. In the cases of the resin composition of Comparative Example 1 not including an MBS resin and the resin composition of Comparative Example 2 including an ABS copolymer polymerized with butadiene having a small particle diameter, plating adhesion is decreased.

In addition, in the case of the resin composition of Comparative Example 3 including a small amount of polycarbonate, mechanical properties, such as tensile strength and impact strength, heat deflection temperature, and plating adhesion are deteriorated. In the case of the resin composition of Comparative Example 4 including a large amount of polycarbonate, low-temperature impact strength and plating adhesion are greatly decreased.

In addition, in the case of the resin compositions of Comparative Examples 6 to 8 which do not include any one of an ABS copolymer polymerized with butadiene having a large particle diameter, an ABS copolymer polymerized with butadiene having a small particle diameter, and an MBS resin, impact strength, particularly low-temperature impact strength is very low and plating adhesion is very poor.

Further, in the case of the resin composition of Comparative Example 10 including an MBS polymerized with a butadiene rubber, the average particle diameter of which is outside the range of 0.1 to 0.3 µm, mechanical properties are maintained, but plating adhesion is decreased.

## Claims

1. A polycarbonate-ABS based alloy resin composition, comprising:
(a) 40 to 70 % by weight of a polycarbonate resin;
(b) 5 to 35 % by weight of a copolymer prepared by polymerizing a conjugated diene rubber having an average particle diameter of 0.6 to 1.5 µm, an aromatic vinyl compound, and a vinyl cyanide compound;
(c) 5 to 20 % by weight of a copolymer prepared by polymerizing a conjugated diene rubber having an average particle diameter of 0.2 µm or more and less than 0.6 µm, an aromatic vinyl compound, and a vinyl cyanide compound;
(d) 5 to 20 % by weight of a copolymer prepared by polymerizing a conjugated diene rubber having an average particle diameter of 0.1 to 0.3 µm, an aromatic vinyl compound, and a (meth)acrylate compound; and
(e) 5 to 40 % by weight of an aromatic vinyl compound-vinyl cyanide compound copolymer,
wherein the average particle diameter is measured by means of a particle size analyzer, as described in the present specification.

2. The polycarbonate-ABS based alloy resin composition according to claim 1, wherein the polycarbonate resin (a) has a weight-average molecular weight of 20,000 to 80,000 g/mol, wherein the weight-average molecular weight is measured by dissolving a sample in tetrahydrofuran and the measuring the weight-average molecular weight using GPC.

3. The polycarbonate-ABS based alloy resin composition according to claim 1, wherein a total amount of the copolymer (b), the copolymer (c), and the copolymer (d) is 20 to 50 % by weight.

4. The polycarbonate-ABS based alloy resin composition according to claim 1, wherein the copolymer (b) is prepared by polymerizing 5 to 20 % by weight of a conjugated diene rubber, 60 to 80 % by weight of an aromatic vinyl compound, and 10 to 30 % by weight of a vinyl cyanide compound.

5. The polycarbonate-ABS based alloy resin composition according to claim 1, wherein the copolymer (c) is prepared by polymerizing 50 to 70 % by weight of a conjugated diene rubber, 20 to 40 % by weight of an aromatic vinyl compound, and 5 to 20 % by weight of a vinyl cyanide compound.

6. The polycarbonate-ABS based alloy resin composition according to claim 1, wherein the (meth)acrylate compound comprised in the copolymer (d) is alkylmethacrylate.

7. The polycarbonate-ABS based alloy resin composition according to claim 1, wherein the copolymer (d) is a core-shell graft copolymer comprising 60 to 80 % by weight of a core and 20 to 40 % by weight of a shell.

8. The polycarbonate-ABS based alloy resin composition according to claim 1, wherein the aromatic vinyl compound-vinyl cyanide compound copolymer (e) is prepared by polymerizing 60 to 85 % by weight of an aromatic vinyl compound and 15 to 40 % by weight of a vinyl cyanide compound.

9. The polycarbonate-ABS based alloy resin composition according to claim 1, wherein the conjugated diene rubber is prepared by polymerizing one or more selected from the group consisting of 1,3-butadiene, 2,3-dimethyl-1,3-butadiene, 2-ethyl-1,3-butadiene, 1,3-pentadiene, and isoprene.

10. The polycarbonate-ABS based alloy resin composition according to claim 1, wherein the aromatic vinyl compound is one or more selected from the group consisting of styrene, α-methylstyrene, o-ethylstyrene, p-ethylstyrene, and vinyltoluene.

11. The polycarbonate-ABS based alloy resin composition according to claim 1, wherein the vinyl cyanide compound is one or more selected from the group consisting of acrylonitrile, methacrylonitrile, and ethacrylonitrile.

12. The polycarbonate-ABS based alloy resin composition according to claim 6, wherein the alkylmethacrylate is one or more selected from the group consisting of methyl methacrylate, butyl methacrylate, and benzyl methacrylate.

13. The polycarbonate-ABS based alloy resin composition according to claim 1, further comprising one or more selected from the group consisting of an antimicrobial agent, a thermal stabilizer, an antioxidant, a releasing agent, a photostabilizer, a surfactant, a coupling agent, a plasticizer, an admixture, a colorant, a stabilizer, a lubricant, an antistatic agent, a toning agent, a flame retardant, a weather resistant agent, an ultraviolet absorber, and a sunscreen agent.

14. The polycarbonate-ABS based alloy resin composition according to claim 1, wherein the polycarbonate resin composition has a plating adhesion of 7.0 N/cm or more, wherein the plating adhesion is measured as described in the specification.

15. A method of manufacturing a polycarbonate-ABS based alloy resin composition, the method comprising a step of melt-mixing (a) 40 to 70 % by weight of a polycarbonate resin; (b) 5 to 35 % by weight of a copolymer prepared by polymerizing a conjugated diene rubber having an average particle diameter of 0.6 to 1.5 µm, an aromatic vinyl compound, and a vinyl cyanide compound; (c) 5 to 20 % by weight of a copolymer prepared by polymerizing a conjugated diene rubber having an average particle diameter of 0.2 µm or more and less than 0.6 µm, an aromatic vinyl compound, and a vinyl cyanide compound; (d) 5 to 20 % by weight of a copolymer prepared by polymerizing a conjugated diene rubber having an average particle diameter of 0.1 to 0.3 µm, an aromatic vinyl compound, and a (meth)acrylate compound; and (e) 5 to 40 % by weight of an aromatic vinyl compound-vinyl cyanide compound copolymer, followed by extrusion, wherein the average particle diameter is measured by means of a particle size analyzer, as described in the present specification.

## Patentansprüche

1. Legierungsharzzusammensetzung auf Basis von Polycarbonat-ABS, umfassend:
(a) 40 bis 70 Gew.-% eines Polycarbonatharzes;
(b) 5 bis 35 Gew.-% eines Copolymers, das hergestellt ist durch Polymerisieren eines konjugierten Dienkautschuks mit einem durchschnittlichen Teilchendurchmesser von 0,6 bis 1,5 µm, einer aromatischen Vinylverbindung und einer Vinylcyanidverbindung;
(c) 5 bis 20 Gew.-% eines Copolymers, das hergestellt ist durch Polymerisieren eines konjugierten Dienkautschuks mit einem durchschnittlichen Teilchendurchmesser von 0,2 µm oder mehr und weniger als 0,6 µm, einer aromatischen Vinylverbindung und einer Vinylcyanidverbindung;
(d) 5 bis 20 Gew.-% eines Copolymers, das hergestellt ist durch Polymerisieren eines konjugierten Dienkautschuks mit einem durchschnittlichen Teilchendurchmesser von 0,1 bis 0,3 µm, einer aromatischen Vinylverbindung und einer (Meth)acrylatverbindung; und
(e) 5 bis 40 Gew.-% eines aromatische Vinylverbindung-Vinylcyanidverbindung-Copolymers,
wobei der durchschnittliche Teilchendurchmesser mittels eines Teilchengrößenanalysators gemessen wird, wie es in der vorliegenden Beschreibung beschrieben wird.

2. Legierungsharzzusammensetzung auf Basis von Polycarbonat-ABS nach Anspruch 1, wobei das Polycarbonatharz (a) ein Gewichtsmittelmolekulargewicht von 20.000 bis 80.000 g/mol aufweist, wobei das Gewichtsmittelmolekulargewicht durch Auflösen einer Probe in Tetrahydrofuran und Messen des Gewichtsmittelmolekulargewichts unter Verwendung von GPC gemessen wird.

3. Legierungsharzzusammensetzung auf Basis von Polycarbonat-ABS nach Anspruch 1, wobei eine Gesamtmenge des Copolymers (b), des Copolymers (c) und des Copolymers (d) 20 bis 50 Gew.-% ist.

4. Legierungsharzzusammensetzung auf Basis von Polycarbonat-ABS nach Anspruch 1, wobei das Copolymer (b) hergestellt ist durch Polymerisieren von 5 bis 20 Gew.-% eines konjugierten Dienkautschuks, 60 bis 80 Gew.-% einer aromatischen Vinylverbindung und 10 bis 30 Gew.-% einer Vinylcyanidverbindung.

5. Legierungsharzzusammensetzung auf Basis von Polycarbonat-ABS nach Anspruch 1, wobei das Copolymer (c) hergestellt ist durch Polymerisieren von 50 bis 70 Gew.-% eines konjugierten Dienkautschuks, 20 bis 40 Gew.-% einer aromatischen Vinylverbindung und 5 bis 20 Gew.-% einer Vinylcyanidverbindung.

6. Legierungsharzzusammensetzung auf Basis von Polycarbonat-ABS nach Anspruch 1, wobei die (Meth)acrylatverbindung, die in dem Copolymer (d) umfasst ist, Alkylmethacrylat ist.

7. Legierungsharzzusammensetzung auf Basis von Polycarbonat-ABS nach Anspruch 1, wobei das Copolymer (d) ein Kern-Mantel-Pfropfcopolymer ist, das 60 bis 80 Gew.-% eines Kerns und 20 bis 40 Gew.-% eines Mantels umfasst.

8. Legierungsharzzusammensetzung auf Basis von Polycarbonat-ABS nach Anspruch 1, wobei das aromatische Vinylverbindung-Vinylcyanidverbindung-Copolymer (e) hergestellt ist durch Polymerisieren von 60 bis 85 Gew.-% einer aromatischen Vinylverbindung und 15 bis 40 Gew.-% einer Vinylcyanidverbindung.

9. Legierungsharzzusammensetzung auf Basis von Polycarbonat-ABS nach Anspruch 1, wobei der konjugierte Dienkautschuk hergestellt ist durch Polymerisieren von einer oder mehreren, ausgewählt aus der Gruppe bestehend aus 1,3-Butadien, 2,3-Dimethyl-1,3-butadien, 2-Ethyl-1,3-butadien, 1,3-Pentadien und Isopren.

10. Legierungsharzzusammensetzung auf Basis von Polycarbonat-ABS nach Anspruch 1, wobei die aromatische Vinylverbindung eine oder mehrere ist, die ausgewählt ist aus der Gruppe bestehend aus Styrol, α-Methylstyrol, o-Ethylstyrol, p-Ethylstyrol und Vinyltoluol.

11. Legierungsharzzusammensetzung auf Basis von Polycarbonat-ABS nach Anspruch 1, wobei die Vinylcyanidverbindung eine oder mehrere ist, ausgewählt aus der Gruppe bestehend aus Acrylnitril, Methacrylnitril und Ethacrylnitril.

12. Legierungsharzzusammensetzung auf Basis von Polycarbonat-ABS nach Anspruch 6, wobei das Alkylmethacrylat eines oder mehrere ist, ausgewählt aus der Gruppe bestehend aus Methylmethacrylat, Butylmethacrylat und Benzylmethacrylat.

13. Legierungsharzzusammensetzung auf Basis von Polycarbonat-ABS nach Anspruch 1, weiter umfassend eines oder mehrere, ausgewählt aus der Gruppe bestehend aus einem antimikrobiellen Agens, einem thermischen Stabilisator, einem Antioxidationsmittel, einem Trennmittel, einem Photostabilisator, einem Tensid, einem Kopplungsmittel, einem Weichmacher, einer Zumischung, einem Farbstoff, einem Stabilisator, einem Schmiermittel, einem antistatischen Mittel, einem Tönungsmittel, einem Flammhemmstoff, einem Witterungsbeständigkeitsmittel, einem Ultraviolettabsorber und einem Sonnnenschirmmittel.

14. Legierungsharzzusammensetzung auf Basis von Polycarbonat-ABS nach Anspruch 1, wobei die Polycarbonatharzzusammensetzung eine Plattierungshaftfähigkeit von 7,0 N/cm oder mehr aufweist, wobei die Plattierungshaftfähigkeit wie in der Beschreibung beschrieben gemessen wird.

15. Verfahren zum Herstellen einer Legierungsharzzusammensetzung auf Basis von Polycarbonat-ABS, wobei das Verfahren umfasst einen Schritt eines Schmelzmischens von (a) 40 bis 70 Gew.-% eines Polycarbonatharzes; (b) 5 bis 35 Gew.-% eines Copolymers, hergestellt durch Polymerisieren eines konjugierten Dienkautschuks mit einem durchschnittlichen Teilchendurchmesser von 0,6 bis 1,5 µm, einer aromatischen Vinylverbindung und einer Vinylcyanidverbindung; (c) 5 bis 20 Gew.-% eines Copolymers, hergestellt durch Polymerisieren eines konjugierten Dienkautschuks mit einem durchschnittlichen Teilchendurchmesser von 0,2 µm oder mehr und weniger als 0,6 µm, einer aromatischen Vinylverbindung und einer Vinylcyanidverbindung; (d) 5 bis 20 Gew.-% eines Copolymers, hergestellt durch Polymerisieren eines konjugierten Dienkautschuks mit einem durchschnittlichen Teilchendurchmesser von 0,1 bis 0,3 µm, einer aromatischen Vinylverbindung und einer (Meth)acrylatverbindung; und (e) 5 bis 40 Gew.-% eines aromatische Vinylverbindung-Vinylcyanidverbindung-Copolymers, gefolgt von Extrusion, wobei der durchschnittliche Teilchendurchmesser mittels eines Teilchengrößenanalysators gemessen wird, wie es in der vorliegenden Beschreibung beschrieben wird.

## Revendications

1. Composition de résine à base d'un alliage polycarbonate-ABS, comprenant :
(a) entre 40 et 70 % en poids d'une résine polycarbonate ;
(b) entre 5 et 35 % en poids d'un copolymère préparé en polymérisant un caoutchouc de diène conjugué ayant un diamètre de particule moyen compris entre 0,6 et 1,5 µm, un composé vinylique aromatique et un composé de cyanure de vinyle ;
(c) entre 5 et 20 % en poids d'un copolymère préparé en polymérisant un caoutchouc de diène conjugué ayant un diamètre de particule moyen supérieur ou égal à 0,2 µm et inférieur à 0,6 µm, un composé vinylique aromatique et un composé de cyanure de vinyle ;
(d) entre 5 et 20 % en poids d'un copolymère préparé en polymérisant un caoutchouc de diène conjugué ayant un diamètre de particule moyen compris entre 0,1 et 0,3 µm, un composé vinylique aromatique et un composé de (méth)acrylate ; et
(e) entre 5 et 40 % en poids d'un copolymère de composé vinylique aromatique-composé de cyanure de vinyle,
dans laquelle le diamètre de particule moyen est mesuré au moyen d'un analyseur de taille de particules, comme décrit dans la présente spécification.

2. Composition de résine à base d'un alliage polycarbonate-ABS selon la revendication 1, dans laquelle la résine polycarbonate (a) a une masse moléculaire moyenne en poids comprise entre 20 000 et 80 000 g/mol, dans laquelle la masse moléculaire moyenne en poids est mesurée en dissolvant un échantillon dans du tétrahydrofurane et en mesurant la masse moléculaire moyenne en poids par GPC.

3. Composition de résine à base d'un alliage polycarbonate-ABS selon la revendication 1, dans laquelle une quantité totale du copolymère (b), du copolymère (c) et du copolymère (d) est comprise entre 20 et 50 % en poids.

4. Composition de résine à base d'un alliage polycarbonate-ABS selon la revendication 1, dans laquelle le copolymère (b) est préparé en polymérisant entre 5 et 20 % en poids d'un caoutchouc de diène conjugué, entre 60 et 80 % en poids d'un composé vinylique aromatique et entre 10 et 30 % en poids d'un composé de cyanure de vinyle.

5. Composition de résine à base d'un alliage polycarbonate-ABS selon la revendication 1, dans laquelle le copolymère (c) est préparé en polymérisant entre 50 et 70 % en poids d'un caoutchouc de diène conjugué, entre 20 et 40 % en poids d'un composé vinylique aromatique et entre 5 et 20 % en poids d'un composé de cyanure de vinyle.

6. Composition de résine à base d'un alliage polycarbonate-ABS selon la revendication 1, dans laquelle le composé de (méth)acrylate compris dans le copolymère (d) est un méthacrylate d'alkyle.

7. Composition de résine à base d'un alliage polycarbonate-ABS selon la revendication 1, dans laquelle le copolymère (d) est un copolymère greffé noyau-enveloppe comprenant entre 60 et 80 % en poids d'un noyau et entre 20 et 40 % en poids d'une enveloppe.

8. Composition de résine à base d'un alliage polycarbonate-ABS selon la revendication 1, dans laquelle le copolymère de composé vinylique aromatique-composé de cyanure de vinyle (e) est préparé en polymérisant entre 60 et 85 % en poids d'un composé vinylique aromatique et entre 15 et 40 % en poids d'un composé de cyanure de vinyle.

9. Composition de résine à base d'un alliage polycarbonate-ABS selon la revendication 1, dans laquelle le caoutchouc de diène conjugué est préparé en polymérisant un ou plusieurs éléments sélectionnés dans le groupe constitué de 1,3-butadiène, 2,3-diméthyl-1,3-butadiène, 2-éthyl-1,3-butadiène, 1,3-pentadiène et isoprène.

10. Composition de résine à base d'un alliage polycarbonate-ABS selon la revendication 1, dans laquelle le composé vinylique aromatique est un ou plusieurs éléments sélectionnés dans le groupe constitué de styrène, α-méthylstyrène, o-éthylstyrène, p-éthylstyrène et vinyltoluène.

11. Composition de résine à base d'un alliage polycarbonate-ABS selon la revendication 1, dans laquelle le composé de cyanure de vinyle est un ou plusieurs éléments sélectionnés dans le groupe constitué d'acrylonitrile, méthacrylonitrile et éthacrylonitrile.

12. Composition de résine à base d'un alliage polycarbonate-ABS selon la revendication 6, dans laquelle le méthacrylate d'alkyle est un ou plusieurs éléments sélectionnés dans le groupe constitué de méthacrylate de méthyle, méthacrylate de butyle et méthacrylate de benzyle.

13. Composition de résine à base d'un alliage polycarbonate-ABS selon la revendication 1, comprenant en outre un ou plusieurs additifs sélectionnés dans le groupe constitué d'un agent antimicrobien, un stabilisant thermique, un antioxydant, un agent de libération, un photostabilisant, un tensioactif, un agent de couplage, un plastifiant, un additif, un colorant, un stabilisant, un lubrifiant, un agent antistatique, un agent tonifiant, un retardateur de flamme, un agent résistant aux intempéries, un absorbeur d'ultraviolets et un agent de protection solaire.

14. Composition de résine à base d'un alliage polycarbonate-ABS selon la revendication 1, dans laquelle la composition de résine polycarbonate a une adhérence de placage supérieure ou égale à 7,0 N/cm, dans laquelle l'adhérence de placage est mesurée comme décrit dans la présente spécification.

15. Procédé de fabrication d'une composition de résine à base d'un alliage polycarbonate-ABS, le procédé comprenant une étape consistant à mélanger à l'état fondu
(a) entre 40 et 70 % en poids d'une résine polycarbonate ;
(b) entre 5 et 35 % en poids d'un copolymère préparé en polymérisant un caoutchouc de diène conjugué ayant un diamètre de particule moyen compris entre 0,6 et 1,5 µm, un composé vinylique aromatique et un composé de cyanure de vinyle ;
(c) entre 5 et 20 % en poids d'un copolymère préparé en polymérisant un caoutchouc de diène conjugué ayant un diamètre de particule moyen supérieur ou égal à 0,2 µm et inférieur à 0,6 µm, un composé vinylique aromatique et un composé de cyanure de vinyle ;
(d) entre 5 et 20 % en poids d'un copolymère préparé en polymérisant un caoutchouc de diène conjugué ayant un diamètre de particule moyen compris entre 0,1 et 0,3 µm, un composé vinylique aromatique et un composé de (méth)acrylate ; et
(e) entre 5 et 40 % en poids d'un copolymère de composé vinylique aromatique-composé de cyanure de vinyle, suivi d'une extrusion, dans laquelle le diamètre de particule moyen est mesuré au moyen d'un analyseur de taille de particules, comme décrit dans la présente spécification.
